# EUROPÄISCHE PATENTSCHRIFT

(11) **EP 2 665 994 B1**
(45) Veröffentlichungstag und Bekanntmachung des Hinweises auf die Patenterteilung: **11.03.2020**
(21) Anmeldenummer: 12701986.7
(22) Anmeldetag: 16.01.2012
(51) Int. Cl.: G01F 15/18, G01N 27/28, F16L 41/16, F16L 55/46, F16L 41/00

(54) **VORRICHTUNG ZUM EINFÜHREN EINES GEGENSTANDS IN EINE ROHRLEITUNG**
DEVICE FOR INTRODUCING AN OBJECT INTO A PIPE
DISPOSITIF D'INTRODUCTION D'UN OBJET DANS UNE CONDUITE

(30) Priorität: 17.01.2011 DE 202011000102 U
(43) Veröffentlichungstag der Anmeldung: 27.11.2013
(73) Patentinhaber: Postberg + Co. Druckluft-Controlling GmbH, 34121 Kassel (DE)
(72) Erfinder: POSTBERG, Hans-Jürgen, 61231 Bad Nauheim (DE)
(74) Vertreter: Bossmeyer, Jörg Peter
(86) Internationale Anmeldenummer: PCT/EP2012/050585
(87) Internationale Veröffentlichungsnummer: WO 2012/098084

(56) Entgegenhaltungen:
- EP-A1- 0 882 896
- DE-A1- 2 653 012
- US-A- 4 177 676

## Beschreibung

Die Erfindung betrifft eine Vorrichtung zum Einführen eines Gegenstands in eine Rohrleitung nach dem Oberbegriff des Anspruchs 1.

Die EP 0 882 896 A1 offenbart eine Wechselarmatur mit einem Sensor, der herausnehmbar in einem Tauchrohr angeordnet ist, welches zusammen mit dem Sensor in einem Gehäuse zwischen einer eingefahrenen Ruhestellung und einer ausgefahrenen, in ein zu erfassendes Behandlungsgut eintauchenden Arbeitsstellung axial verschiebbar ist, sowie mit einer Sicherungsvorrichtung, die ein axiales Verschieben des Tauchrohres verhindert, wenn kein Sensor eingesetzt ist, wobei die Sicherungsvorrichtung auf der Außenseite des Tauchrohres angeordnet und gegenüber dem Behandlungsgut auf der Innenseite des Tauchrohrs dicht ausgebildet ist.

Die DE 26 53 012 A1 beschreibt eine Arretierungsvorrichtung für ein verschiebbares Element, insbesondere für den verschiebbaren Tragarm einer Hebebühne, umfassend eine Stange, die in einer Hülse verschiebbar ist, welche auf dem Innenumfang mit einem konischen Abschnitt versehen ist, in dessen Bereich Klemmkörper auf dem Umfang der Stange angeordnet sind, die durch den Reibungswiderstand auf dem Stangenumfang beim Verschieben der Stange in einer vorgegebenen Richtung relativ zur Hülse an dem konischen Abschnitt festklemmbar sind.

Wird von einer Bedienperson der Gegenstand durch Verschieben der Positioniereinrichtung in Einführrichtung in die Rohrleitung eingeführt, wenn in dieser ein unter Druck stehendes Fluid, wie z.B. Druckluft, eingebracht ist, so darf die Bedienperson die Positioniereinrichtung nicht loslassen, da andernfalls die Positioniereinrichtung aufgrund des Drucks entgegen der Einführrichtung zurückgeschoben würde. Die Bedienperson muss daher die Positioniereinrichtung solange gegen den von dem Fluid ausgeübten Druck festhalten, bis sie in der gewünschten Position an der Rohrleitung befestigt worden ist. Diese Tätigkeit ist für die Bedienperson mühsam und erschwert das Einbringen des Gegenstands in die Rohrleitung.

Ausgehend hiervon liegt der Erfindung die Aufgabe zugrunde, bei einer Vorrichtung der eingangs genannten Art das Einführen des Gegenstands in die Rohrleitung zu erleichtern, in die ein unter Druck stehendes Fluid eingebracht ist.

Diese Aufgabe wird erfindungsgemäß mit einer Vorrichtung nach Anspruch 1 gelöst. Bevorzugte Weiterbildungen der Erfindung sind in den Unteransprüchen gegeben.

Die erfindungsgemäße Vorrichtung zum Einführen eines Gegenstands in eine Rohrleitung umfasst eine mit der Rohrleitung fest verbundene Führung, eine mittels der Führung in einer Einführrichtung verschiebbar an der Rohrleitung geführte und den Gegenstand tragende Positioniereinrichtung, der durch Verschieben der Positioniereinrichtung in Einführrichtung in die Rohrleitung einführbar ist, und einen lineare Freilauf, wobei die Positioniereinrichtung mit der Rohrleitung unter Zwischenschaltung des linearen Freilaufs verbunden ist, der bei Verschieben der Positioniereinrichtung entgegen der Einführrichtung seinen Sperrzustand annimmt.

Durch den linearen Freilauf ist ein Verschieben der Positioniereinrichtung in die der Einführrichtung entgegengesetzte Richtung blockiert oder blockierbar. Somit darf eine Bedienperson die Positioniereinrichtung beim Einführen des Gegenstands in die Rohrleitung loslassen, ohne dass die Gefahr besteht, dass die Positioniereinrichtung aufgrund des Drucks entgegen der Einführrichtung zurückgeschoben wird. Der lineare Freilauf bildet somit eine Rückschlagsicherung für die Positioniereinrichtung. Bei Verschieben der Positioniereinrichtung in Einführrichtung nimmt der Freilauf hingegen seinen Freilaufzustand an. Somit wird ein Verschieben der Positioniereinrichtung in Einführrichtung von dem Freilauf zugelassen.

Gemäß einer Weiterbildung der Erfindung umfasst der Freilauf eine betätigbare Freigabeeinrichtung, mittels welcher der Sperrzustand deaktivierbar ist. Insbesondere ist es möglich, durch eine Betätigung der Freigabeeinrichtung die Positioniereinrichtung entgegen der Einführrichtung zu verschieben. Somit kann der Gegenstand aus der Rohrleitung herausgeführt werden, beispielsweise zum Zwecke der Reparatur, der Wartung oder des Austauschs.

Gemäß einer Ausgestaltung der Erfindung umfasst die Führung und/oder der Freilauf eine Feststelleinrichtung, mittels welcher die Positioniereinrichtung an der Rohrleitung fixierbar ist. Somit ist es möglich, den Gegenstand in einer gewünschten Position in der Rohrleitung zu fixieren, ohne dass ein weiteres Einschieben des Gegenstands in die Rohrleitung möglich ist. Die Feststelleinrichtung ist vorzugsweise lösbar, sodass der Gegenstand im gelösten Zustand der Feststelleinrichtung in Einführrichtung verschiebbar ist. Bevorzugt ist oder wird die Feststelleinrichtung im betätigten Zustand der Freigabeeinrichtung gelöst, sodass der Gegenstand aus der Rohrleitung herausgeführt werden kann. Vorteilhaft sind die Freigabeeinrichtung und die Feststelleinrichtung derart miteinander gekoppelt, dass die Feststelleinrichtung im betätigten Zustand der Freigabeeinrichtung gelöst ist.

Erfindungsgemäß ist der Freilauf als Klemmfreilauf ausgebildet, sodass eine stufenlose Positionierung der Positioniereinrichtung möglich ist. Dabei umfasst der Freilauf einen Klemmmechanismus, der durch Verschieben der Positioniereinrichtung betätigt wird oder werden kann.

Der Freilauf ist fest mit der Führung und/oder mit der Rohrleitung verbunden. Ferner kann der Freilauf getrennt von der Führung vorgesehen sein. Gemäß einer Alternative umfasst die Führung den Freilauf und/oder der Freilauf und die Führung sind kombiniert miteinander ausgebildet, sodass insbesondere ein kompakterer Aufbau der erfindungsgemäßen Vorrichtung erzielbar ist. Ferner ist es möglich, dass der Freilauf die Führung bildet.

Gemäß der Erfindung umfasst die Positioniereinrichtung eine in die Rohrleitung in Einführrichtung einschiebbare Aufnahme, an deren der Rohrleitung zugewandtem Endbereich der Gegenstand angeordnet ist. Insbesondere ist die Aufnahme länglich, bevorzugt in Einführrichtung länglich ausgebildet. Erfindungsgemäß ist die Aufnahme als Rohr ausgebildet, sodass insbesondere an den Gegenstand angeschlossene elektrische Leitungen durch den Innenraum des Rohrs hindurchgeführt werden können. Somit ist es vermeidbar, derartige Leitungen am Außenumfang der Aufnahme zu verlegen, was zu Dichtigkeitsproblemen führen könnte. Bevorzugt ist die Positioniereinrichtung mittels der Aufnahme an oder in der Führung in Einführrichtung verschiebbar geführt, wobei die Aufnahme vorteilhaft gegenüber der Führung abgedichtet ist, beispielsweise mittels eines oder wenigstens eines Dichtungsrings.

Gemäß der Erfindung umfasst die Positioniereinrichtung eine mit dem Freilauf in Wirkverbindung stehende Sicherungskomponente. Die Sicherungskomponente dient insbesondere dazu, die Positioniereinrichtung im Sperrzustand des Freilaufs an dem Freilauf festzuhalten, sodass eine Bewegung der Positioniereinrichtung entgegen der Einführrichtung blockiert ist. Bevorzugt weist die Sicherungskomponente, zumindest im Bereich des Freilaufs, in Längsrichtung einen konstanten oder im Wesentlichen konstanten Außenumfang oder Durchmesser auf. Vorzugsweise weist die Sicherungskomponente, zumindest im Bereich des Freilaufs, eine zylindrische oder im Wesentlichen zylindrische Außenumfangsfläche auf.

Gemäß einer ersten Variante der Erfindung ist die Sicherungskomponente durch die Aufnahme gebildet. Hierdurch ergibt sich ein besonders kompakter Aufbau der erfindungsgemäßen Vorrichtung. Gemäß einer anderen Variante der Erfindung ist die Sicherungskomponente fest mit der Aufnahme verbunden. In diesem Fall ist die Sicherungskomponente insbesondere zusätzlich zu der Aufnahme vorgesehen und bildet bevorzugt ein separates Bauteil. Somit kann z.B. eine herkömmliche Vorrichtung zum Einführen eines Gegenstands in erfindungsgemäßer Weise nachgerüstet werden. Gemäß der anderen Variante ist die Sicherungskomponente durch ein oder wenigstens ein Seil gebildet, welches fest mit der Aufnahme verbunden ist. Die Ausbildung der Sicherungskomponente als Seil bietet den Vorteil, dass sie bei einem großen Durchmesser der Rohrleitung flexibel an dieser vorbeigeführt werden kann.

Gemäß der Erfindung umfasst der Freilauf ein Gehäuse, durch welches sich die Sicherungskomponente in einer Längsrichtung hindurch erstreckt. Dabei ist in dem Gehäuse eine oder wenigstens eine in Längsrichtung schräg oder gekrümmt verlaufende Klemmfläche vorgesehen, wobei zwischen der Klemmfläche und der Sicherungskomponente wenigstens ein bewegbares Klemmelement angeordnet ist, welches sowohl an der Sicherungskomponente als auch an der Klemmfläche anliegt. Hierdurch ist eine Realisierungsmöglichkeit des linearen Freilaufs als Klemmfreilauf geschaffen. Dabei ist die Sicherungskomponente in Längsrichtung relativ zu dem Gehäuse verschiebbar, wohingegen eine Verschiebung der Sicherungskomponente in einer der Längsrichtung entgegengesetzten Richtung durch ein Zusammenwirken des Klemmelements mit der Sicherungskomponente und der Klemmfläche blockiert oder blockierbar ist. Der Abstand zwischen der Klemmfläche und der Sicherungskomponente nimmt insbesondere in Längsrichtung zu. Gemäß einer Weiterbildung der Erfindung ist die Klemmfläche durch eine in Längsrichtung konische Innenumfangsfläche des Gehäuses gebildet. Bevorzugt verjüngt sich die Klemmfläche in einer der Längsrichtung entgegengesetzten Richtung. Die Längsrichtung verläuft in Einführrichtung und/oder fällt mit dieser zusammen.

Bevorzugt ist in dem Gehäuse eine verschiebbare Hülse angeordnet, in welcher das Klemmelement gelagert ist und durch welche sich die Sicherungskomponente in Längsrichtung hindurch erstreckt. Die Hülse ist insbesondere in Längsrichtung und/oder entgegen der Längsrichtung relativ zu dem Gehäuse verschiebbar. Bevorzugt ist ferner die Sicherungskomponente relativ zu der Hülse in Längsrichtung verschiebbar. Vorteilhaft ist in der Wandung der Hülse ein oder wenigstens ein sich quer oder schräg zur Längsrichtung erstreckendes Durchgangsloch vorgesehen, in welchem das Klemmelement einliegt. Bevorzugt folgt die Außenumfangsfläche der Hülse zumindest bereichsweise dem Verlauf der Klemmfläche. Bei einer Verschiebung der Sicherungskomponente relativ zu dem Gehäuse entgegen der Längsrichtung nimmt die Sicherungskomponente aufgrund von Reibung insbesondere die Hülse zusammen mit dem Klemmelement mit, bis dieses zwischen der Sicherungskomponente und der Klemmfläche eingeklemmt wird und dadurch ein weiteres Verschieben der Sicherungskomponente entgegen der Längsrichtung reibschlüssig verhindert. Dieser Zustand entspricht dem Sperrzustand des Freilaufs. Bei einer Verschiebung der Sicherungskomponente relativ zu dem Gehäuse in Längsrichtung nimmt die Sicherungskomponente aufgrund von Reibung insbesondere die Hülse und das Klemmelement mit, bis sich dieses quer oder schräg zur Längsrichtung bewegen kann und/oder bis das Klemmelement nicht mehr zwischen der Sicherungskomponente und der Klemmfläche eingeklemmt ist. Hierdurch wird die Sicherungskomponente freigegeben, sodass diese relativ zu dem Gehäuse in Längsrichtung verschoben werden kann. Dieser Zustand entspricht dem Freilaufzustand des Freilaufs.

Gemäß einer Weiterbildung der Erfindung ist die Hülse mittels einer Feder vorgespannt, sodass das Klemmelement sowohl gegen die Sicherungskomponente als auch gegen die Klemmfläche gedrückt wird. Bevorzugt ist die Hülse mittels der Feder axial und/oder in einer der Längsrichtung entgegengesetzten Richtung vorgespannt. Hierdurch kann sichergestellt werden, dass der Freilauf mittels der Sicherungskomponente stets von dem Freilaufzustand in den Sperrzustand umgeschaltet werden kann. Dies gilt insbesondere unabhängig von der Lage der Positioniereinrichtung zu der Rohrleitung. Der Freilauf bietet somit inhärente Sicherheit. Liegt das Klemmelement nicht an der Sicherungskomponente an, besteht die Gefahr, dass der Sperrzustand nicht sicher erreicht werden kann.

Gemäß einer Ausgestaltung der Erfindung sind in der Hülse ein oder mehrere, vorzugsweise drei, Klemmelemente gelagert, die jeweils sowohl an der Sicherungskomponente als auch an der Klemmfläche anliegen. Somit ist neben einer gleichmäßigen Klemmung im Sperrzustand auch eine gute Führung der Sicherungskomponente im Freilauf erzielbar. Ist jedes der Klemmelemente ferner als Kugel ausgebildet, wird durch die Klemmelemente ein Kugellager geschaffen, mittels welchem die Sicherungskomponente in dem Freilauf, vorzugsweise drehbar, gelagert ist.

Ist die Sicherungskomponente durch die Aufnahme gebildet, kann ein innerer Bereich des Freilaufs noch unter Druck stehen, wenn die Aufnahme aus dem Freilauf herausgeführt werden soll. Bevorzugt umfasst der Freilauf daher ein Entlüftungsventil, mittels welchem der innere Bereich entlüftet werden kann. Das Entlüftungsventil ist insbesondere an dem Gehäuse des Freilaufs befestigt. Vorzugsweise umfasst das Entlüftungsventil ein Betätigungselement, mittels welchem eine gasdurchlässige Verbindung von dem inneren Bereich zu der Umgebung oder zu einer Entlüftungskammer hin freigebbar ist, sodass der innere Bereich entlüftet werden kann. Im nicht betätigten Zustand des Betätigungselements ist das Entlüftungsventil hingegen bevorzugt gasundurchlässig. Gemäß einer Weiterbildung der Erfindung umfasst das Entlüftungsventil ferner eine Druckanzeige, mittels welcher angezeigt werden kann, ob der innere Bereich unter Druck steht. Die Druckanzeige kann durch das Betätigungselement gebildet sein.

Der Gegenstand ist oder wird bevorzugt in der Mitte der Rohrleitung positioniert. Der Ausdruck "Mitte" bezieht sich insbesondere auf den Querschnitt der Rohrleitung. Somit können durch die Innenwandung der Rohrleitung hervorgerufene Störeinflüsse auf die Messung reduziert werden. Dies ist insbesondere dann wünschenswert, wenn die Rohrleitung einen relativ kleinen Innendurchmesser, beispielsweise eine Nennweite von 40 mm bis 100 mm, aufweist.

Gemäß einer Weiterbildung der Erfindung ist an der Aufnahme ein Justierelement verschiebbar geführt, an dem ein Endanschlag vorgesehen ist, der durch Verschieben des Justierelements relativ zu der Aufnahme mit einer Gegenfläche der Aufnahme zur Anlage gebracht werden kann, wobei das Justierelement mit der Rohrleitung unter Zwischenschaltung eines zusätzlichen linearen Freilaufs verbunden ist. Vorzugsweise ist das Justierelement in Einführrichtung verschiebbar an der Aufnahme geführt und kann durch Verschieben in Einführrichtung relativ zu der Aufnahme mit seinem Endanschlag mit der Gegenfläche zur Anlage gebracht werden. Insbesondere nimmt der zusätzliche Freilauf bei Verschieben des Justierelements entgegen der Einführrichtung seinen Sperrzustand an. Die Freiläufe sind vorzugsweise gleichartig aufgebaut. Der zusätzliche lineare Freilauf weist insbesondere eine betätigbare Freigabeeinrichtung auf, mittels welcher der Sperrzustand des zusätzlichen Freilaufs deaktivierbar ist. Gemäß dieser Weiterbildung der Erfindung ist es möglich, den Gegenstand selbst dann in einer gewünschten Position in der Rohrleitung zu positionieren, wenn der Innendurchmesser und/oder die Wandstärke der Rohrleitung unbekannt sind. Dazu wird in einem ersten Schritt die Aufnahme in Einführrichtung derart weit in die Rohrleitung eingeschoben, bis der Gegenstand mit seinem der Rohrleitung zugewandtem Endbereich oder die Aufnahme mit ihrem der Rohrleitung zugewandtem Endbereich an der Innenwandung der Rohrleitung anliegt. Danach wird in einem zweiten Schritt der Sperrzustand des (ersten) Freilaufs deaktiviert und die Aufnahme entgegen der Einführrichtung verschoben, bis der Endanschlag an der Gegenfläche der Aufnahme anliegt. Ein weiteres Verschieben der Aufnahme entgegen der Einführrichtung wird nun blockiert, da der zusätzliche Freilauf seinen Sperrzustand annimmt. Wird der Weg, um den die Aufnahme im ersten Schritt verschoben wird, gemessen, und wird ferner der Außendurchmesser der Rohrleitung gemessen, so lässt sich aus den gemessenen Größen der Innendurchmesser der Rohrleitung bestimmen. Da der Gegenstand mit seinem rohrleitungsseitigen Endbereich an der Innenwandung der Rohrleitung anliegt oder die Aufnahme mit ihrem rohrleitungsseitigen Endbereich an der Innenwandung der Rohrleitung anliegt und die Position des Gegenstands relativ zu diesem Endbereich bekannt ist, lässt sich auch der Abstand zwischen dem Gegenstand und der gewünschten Position bestimmen. Bevorzugt wird das Justierelement zwischen dem ersten Schritt und dem zweiten Schritt relativ zu der Aufnahme derart weit verschoben, dass der Endanschlag zu der Gegenfläche den zuvor bestimmten Abstand aufweist, sodass der Gegenstand im zweiten Schritt in die gewünschte Position überführt wird. Die gewünschte Position ist vorzugsweise die Mitte der Rohrleitung. Das Justierelement ist z.B. durch ein Zugmittel, beispielsweise durch ein Seil, gebildet. Die Ausbildung des Justierelements als Seil bietet den Vorteil, dass es bei einem großen Durchmesser der Rohrleitung flexibel an dieser vorbeigeführt werden kann.

In die Rohrleitung ist insbesondere ein unter Druck stehendes Fluid eingebracht. Bei dem unter Druck stehenden Fluid handelt es sich z.B. um Druckluft oder um ein anderes unter Druck stehendes Fluid. Der Druck liegt beispielsweise zwischen 6 bis 8 bar, kann aber auch bis zu 16 bar oder mehr betragen. Gemäß einer Ausgestaltung der Erfindung strömt das Fluid in der Rohrleitung.

Der Gegenstand ist vorzugsweise ein körperlicher Gegenstand. Beispielsweise ist der Gegenstand ein elektrisches Bauelement.

Gemäß einer Ausgestaltung der Erfindung ist oder umfasst der Gegenstand einen oder wenigstens einen Messwertgeber. Insbesondere ist oder umfasst die Positioniereinrichtung eine oder wenigstens eine Messeinrichtung. In diesem Fall kann die Aufnahme auch als Sensoraufnahme bezeichnet werden. Mittels des Gegenstands oder des Messwertgebers ist bevorzugt eine oder wenigstens eine physikalische Eigenschaft des in die Rohrleitung eingebrachten Fluids messbar. Bevorzugt ist mittels des Gegenstands oder des Messwertgebers ein oder wenigstens ein diese Eigenschaft charakterisierendes Signal abgebbar, welches vorteilhaft ein elektrisches Signal ist. Die physikalische Eigenschaft des Fluids umfasst z.B. den Druck und/oder die Temperatur und/oder die Feuchtigkeit und/oder die Strömungsgeschwindigkeit und/oder die Strömungsrichtung des Fluids, insbesondere am Ort des Gegenstands oder des Messwertgebers. Der Messwertgeber umfasst bevorzugt wenigstens einen Drucksensor und/oder wenigstens einen Strömungssensor und/oder wenigstens einen Temperatursensor und/oder wenigstens einen Feuchtigkeitssensor und/oder wenigstens einen Strömungsrichtungssensor und/oder andere Sensoren. Der Messwertgeber und/oder die Sensoren sind vorteilhaft jeweils als Stabsensor ausgebildet.

Ergänzend oder alternativ ist oder umfasst der Gegenstand insbesondere einen oder wenigstens einen Probenentnehmer, mittels welchem eine oder wenigstens eine Probe des in die Rohrleitung eingebrachten Fluids entnehmbar ist. Die Positioniereinrichtung ist oder umfasst in diesem Fall vorzugsweise eine oder wenigstens eine Proben-Entnahmeeinrichtung. Der Probenentnehmer ist z.B. durch einen verschließbaren Behälter gebildet.

Die Positioniereinrichtung, insbesondere die Aufnahme, ist vorzugsweise mittels wenigstens einer Dichtung gegenüber der Führung und/oder dem Freilauf abgedichtet. Somit kann ein Austreten des Fluids an der Schnittstelle zwischen der Aufnahme und der Führung und/oder dem Freilauf verhindert werden. Die Dichtung bildet bevorzugt einen Dichtungsring, der insbesondere in einem an der Führung und/oder dem Freilauf vorgesehenen Bett einliegt und dichtend an der Außenumfangsfläche der Aufnahme anliegt.

Die Aufnahme kann eine kreisförmige Außenumfangskontur aufweisen. Gemäß einer Weiterbildung der Erfindung weist die Aufnahme eine von der Kreisform abweichende Außenumfangskontur auf, die mit einer von der Kreisform abweichenden Innenumfangskontur der Führung und/oder des Freilaufs als Verdrehsicherung zusammenwirkt. Insbesondere folgt dabei die von der Kreisform abweichende Innenumfangskontur der Führung und/oder des Freilaufs der von der Kreisform abweichenden Außenumfangskontur der Aufnahme. Ferner folgt der Dichtungsring bevorzugt der von der Kreisform abweichenden Außenumfangskontur der Aufnahme. Der Dichtungsring besteht insbesondere aus einem flexiblen Material. Vorzugsweise ist auch das Bett des Dichtungsrings mit einer von der Kreisform abweichenden Innenumfangskontur versehen, die der von der Kreisform abweichenden Außenumfangskontur der Aufnahme folgt. Somit kann trotz der von der Kreisform abweichenden Konturen eine ausreichende Dichtigkeit mittels des Dichtungsrings erzielt werden. Die von der Kreisform abweichenden Konturen basieren vorzugsweise jeweils auf einer Kreisform, die mit einer Abflachung versehen ist.

Gemäß einer Weiterbildung der Erfindung umfasst die Führung ein Absperrventil. Somit ist es möglich, im demontierten Zustand der Positioniereinrichtung ein Austreten des Fluids durch die Führung zu vermeiden.

Die Führung kann durch die Rohrleitung gebildet oder an dieser befestigt sein. Insbesondere ist die Führung an der Rohrleitung angeflanscht. Alternativ kann die Führung aber auch mittels einer Schelle an der Rohrleitung befestigt sein.

Die Positioniereinrichtung erstreckt sich durch die Wandung der Rohrleitung hindurch. Dafür ist in der Wandung der Rohrleitung ein Loch vorgesehen, durch welches sich die Positioniereinrichtung hindurch erstreckt. Vorzugsweise ist die Positioniereinrichtung sowohl innerhalb als auch außerhalb der Rohrleitung angeordnet.

Ist die erfindungsgemäße Vorrichtung nachträglich an einer bereits in Betrieb genommenen Rohrleitung zu installieren, besteht ein Problem darin, das Loch in die Wandung der Rohrleitung einzubringen, wenn in diese das unter Druck stehende Fluid eingebracht ist. Gemäß einem ersten Lösungsansatz wird die Rohrleitung vor dem Einbringen des Lochs in die Rohrleitungswandung abgeschaltet. Dies kann aber zu einem wirtschaftlichen Nachteil für den Betreiber der Rohrleitung führen, da diese für die Dauer der Installation nicht nutzbar ist. Aus diesem Grund besteht der Bedarf, das Loch auch dann in die Wandung der Rohrleitung einbringen zu können, wenn in diese ein unter Druck stehendes Fluid eingebracht ist.

Gemäß einem zweiten Lösungsansatz wird die das Absperrventil umfassende Führung fest, insbesondere starr, mit der Rohrleitung verbunden, beispielsweise mittels der Schelle. Anschließend wird in die Führung ein Bohrer eingeführt, der insbesondere gegenüber der Führung angedichtet ist. Bei geöffnetem Absperrventil wird nun mittels des Bohrers das Loch in die Rohrleitungswandung eingebracht. Der Bohrer und/oder eine diesen haltende Bohrmaschine ist dabei an der Führung und/oder der Rohrleitung gesichert, sodass der Bohrer nach dem Durchdringen der Rohrleitungswandung durch das unter Druck stehende Fluid nicht vollständig aus der Führung herausgedrückt werden kann. Nachdem der Bohrer die Rohrleitungswandung durchdrungen hat, wird er teilweise aus der Führung herausgeführt, sodass das Absperrventil geschlossen werden kann. Der Bohrer sitzt dabei aber noch in der Führung und ist vorzugsweise auch noch gegenüber dieser abgedichtet. Das Absperrventil wird nun geschlossen, wonach der Bohrer und/oder die Bohrmaschine von der Führung und/oder der Rohrleitung gelöst und der Bohrer vollständig aus der Führung herausgeführt wird. Somit ist das Einbringen des Lochs in die Wandung der Rohrleitung auch dann möglich, wenn in diese ein unter Druck stehendes Fluid eingebracht ist.

Gemäß einer Ausgestaltung umfasst die Führung ein mit der Rohrleitung fest, vorzugsweise starr, verbundenes Führungsrohr, in welchem das Absperrventil angeordnet ist. Insbesondere mündet das Führungsrohr in die Rohrleitung ein. Die Positioniereinrichtung und/oder die Aufnahme ist bevorzugt in dem Führungsrohr in Einführrichtung verschiebbar geführt. Vorzugsweise erstreckt sich die Positioniereinrichtung und/oder die Aufnahme durch das Führungsrohr hindurch, insbesondere im geöffneten Zustand des Absperrventils. Zum Sperren des Absperrventils wird die Positioniereinrichtung und/oder die Aufnahme bevorzugt teilweise aus dem Führungsrohr herausgeführt, insbesondere entgegen der Einführrichtung, bis das Absperrventil betätigbar ist. Das Absperrventil kann nun in seinen gesperrten Zustand überführt werden.

Gemäß einer anderen Ausgestaltung umfasst die Führung ein mit der Rohrleitung fest, insbesondere starr, verbundenes erstes Gelenkteil und ein an diesem schwenkbar gelagertes zweites Gelenkteil, welches zusammen mit dem ersten Gelenkteil das Absperrventil bildet. Das Absperrventil ist durch Schwenken des zweiten Gelenkteils betätigbar und bildet insbesondere ein Schwenklager. Die Gelenkteile umfassen jeweils ein Durchführungsloch, wobei die Durchführungslöcher in einem geöffneten Zustand des Absperrventils miteinander fluchten und bevorzugt strömungsleitend miteinander verbunden sind. Jedes der Durchführungslöcher erstreckt sich vorteilhaft durch das jeweilige Gelenkteil hindurch. Insbesondere mündet das Durchführungsloch des ersten Gelenkteils in die Rohrleitung ein. Ausgehend vom geöffneten Zustand kann das Absperrventil durch Schwenken des zweiten Gelenkteils in den gesperrten Zustand überführt werden, in dem die Durchführungslöcher nicht miteinander fluchten und bevorzugt auch keine strömungsleitende Verbindung miteinander aufweisen. Durch Schwenken des zweiten Gelenkteils in die entgegengesetzte Richtung kann das Absperrventil ausgehend vom gesperrten Zustand wieder in den geöffneten Zustand überführt werden. Im gesperrten Zustand des Absperrventils sind die Durchführungslöcher insbesondere gegeneinander abgedichtet, vorzugsweise durch die Gelenkteile und/oder durch eine Dichtung. Bevorzugt umfasst das erste Gelenkteil einen Dichtungsring, der um das Durchführungsloch des ersten Gelenkteils herum verläuft und an dem zweiten Gelenkteil anliegt. Vorteilhaft bildet der Dichtungsring die vorgenannte Dichtung. Insbesondere liegt der Dichtungsring sowohl im geöffneten Zustand als auch im gesperrten Zustand des Absperrventils dichtend an beiden Gelenkteilen an. Gemäß dieser Ausgestaltung ist die Führung in Einführrichtung besonders kompakt ausbildbar. Insbesondere baut die Führung in Einführrichtung besonders kurz, sodass auch die Positioniereinrichtung und/oder die Aufnahme in Einführrichtung besonders kurz ausgebildet werden kann. Der Freilauf ist bevorzugt fest, insbesondere starr, mit dem zweiten Gelenkteil verbunden. Vorzugsweise ist der Freilauf mit dem zweiten Gelenkteil verschraubt.

Die Positioniereinrichtung und/oder die Aufnahme ist bevorzugt in dem Durchführungsloch des zweiten Gelenkteils und/oder in zumindest einem der Durchführungslöcher und/oder in den Durchführungslöchern in Einführrichtung verschiebbar geführt. Vorzugsweise erstreckt sich die Positioniereinrichtung und/oder die Aufnahme durch die Durchführungslöcher hindurch, insbesondere im geöffneten Zustand des Absperrventils. Zum Sperren des Absperrventils wird die Positioniereinrichtung und/oder die Aufnahme bevorzugt aus dem Durchführungsloch des ersten Gelenkteils herausgeführt, insbesondere entgegen der Einführrichtung, bis das zweite Gelenkteil schwenkbar ist.

Vorteilhaft ist das Durchführungsloch des zweiten Gelenkteils im gesperrten Zustand des Absperrventils zu einer Lagerfläche des ersten Gelenkteils hin offen, an welcher das zweite Gelenkteil anliegt. Bevorzugt kann somit eine automatische Entlüftung des zweiten Gelenkteils erfolgen, da die Lagerfläche des ersten Gelenkteils das Durchgangsloch des zweiten Gelenkteils insbesondere nicht gegenüber der Umgebung abdichtet. Somit kann auf ein separates Entlüftungsventil verzichtet werden. Ist der Freilauf mit dem zweiten Gelenkteil verbunden, kann zusammen mit der Entlüftung des zweiten Gelenkteils auch eine Entlüftung des Freilaufs erfolgen.

Die Erfindung wird nachfolgend anhand bevorzugter Ausführungsformen unter Bezugnahme auf die Zeichnung beschrieben. In der Zeichnung zeigen:
- Fig. 1: eine perspektivische Darstellung einer Vorrichtung gemäß einer ersten Ausführungsform der Erfindung,
- Fig. 2: eine perspektivische Darstellung einer Messeinrichtung und eines Freilaufs gemäß der ersten Ausführungsform,
- Fig. 3: einen Längsschnitt durch die Messeinrichtung und durch den Freilauf gemäß der ersten Ausführungsform entlang der aus Fig. 2 ersichtlichen Schnittlinie A-A,
- Fig. 4: einen Längsschnitt durch den Freilauf gemäß der ersten Ausführungsform,
- Fig. 5: einen Querschnitt durch den Freilauf gemäß der ersten Ausführungsform entlang der aus Fig. 3 ersichtlichen Schnittlinie B-B,
- Fig. 6: einen Querschnitt durch den Freilauf gemäß der ersten Ausführungsform entlang der aus Fig. 3 ersichtlichen Schnittlinie C-C,
- Fig. 7: eine perspektivische Darstellung einer Vorrichtung gemäß einer zweiten Ausführungsform der Erfindung,
- Fig. 8: eine perspektivische Darstellung einer Vorrichtung gemäß einer dritten Ausführungsform der Erfindung,
- Fig. 9: einen Längsschnitt durch die Vorrichtung gemäß der dritten Ausführungsform,
- Fig. 10: einen Querschnitt durch den Freilauf entlang der aus Fig. 3 ersichtlichen Schnittlinie B-B gemäß einer Abwandlung der ersten Ausführungsform,
- Fig. 11: einen Querschnitt durch den Freilauf entlang der aus Fig. 3 ersichtlichen Schnittlinie C-C gemäß der Abwandlung der ersten Ausführungsform und
- Fig. 12: einen Längsschnitt durch die Messeinrichtung und durch den Freilauf gemäß einer Weiterbildung der ersten Ausführungsform entlang der aus Fig. 2 ersichtlichen Schnittlinie A-A,
- Fig. 13: eine Seitenansicht einer Vorrichtung gemäß einer vierten Ausführungsform der Erfindung in einem ungeschwenkten Zustand,
- Fig. 14: eine Schnittansicht der Vorrichtung gemäß der vierten Ausführungsform entlang der aus Fig. 13 ersichtlichen Schnittlinie D-D und
- Fig. 15: eine Seitenansicht der Vorrichtung gemäß der vierten Ausführungsform in einem geschwenkten Zustand.

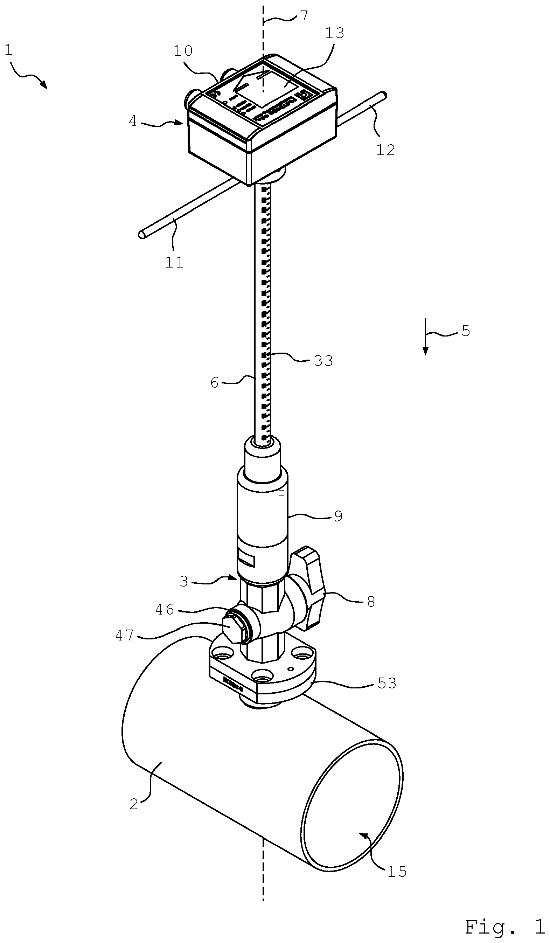

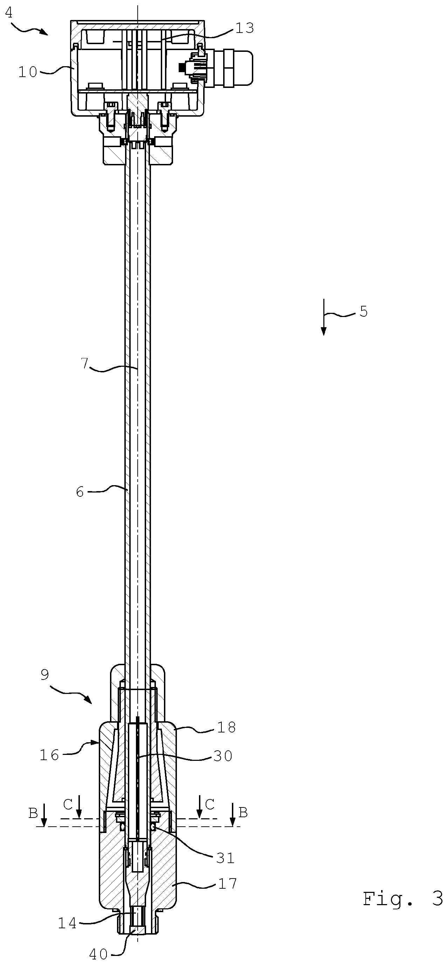

Aus den Fig. 1 bis 6 sind unterschiedliche Darstellungen und Teildarstellungen einer Vorrichtung 1 gemäß einer ersten Ausführungsform der Erfindung ersichtlich, wobei an einer Rohrleitung 2 eine Führung 3 angeflanscht ist, in der eine Positioniereinrichtung in Form einer Messeinrichtung 4 in einer Einführrichtung 5 verschiebbar geführt ist. Die Messeinrichtung 4 umfasst eine rohrförmige Aufnahme 6, die auch als Sensoraufnahme bezeichnet wird und deren in Einführrichtung 5 verlaufende Mittellängsachse mit dem Bezugszeichen 7 gekennzeichnet ist. Die Führung 3 umfasst ein Absperrventil 8 und einen linearen Freilauf 9, der ein Verschieben der Sensoraufnahme 6 in Einführrichtung 5 zulässt und ein Verschieben der Sensoraufnahme 6 in die entgegengesetzte Richtung blockiert. An ihrem der Rohrleitung 2 abgewandten Ende ist an der Sensoraufnahme 6 ein Gehäuse 10 mit zwei Griffen 11 und 12 befestigt, welches eine Messelektronik 13 umfasst, die mit einem Gegenstand in Form eines Messwertgebers 14 (siehe Fig. 3) elektrisch verbunden ist, der an dem der Rohrleitung 2 zugewandten Endbereich 40 der Sensoraufnahme 6 befestigt ist. In den Innenraum 15 der Rohrleitung 2 ist ein unter Druck stehendes Fluid, vorzugsweise Druckluft eingebracht, welches bei geöffnetem Absperrventil 8 die Messeinrichtung 4 entgegen der Einführrichtung 5 drückt. Ergreift eine Bedienperson die Griffe 11 und 12 und verschiebt die Messeinrichtung 4 in Einführrichtung 5, so wird Arbeit gegen den Druck des Fluids geleistet. Lässt die Bedienperson die Messeinrichtung 4 los, so verhindert der Freilauf 9, dass die Messeinrichtung 4 aufgrund des Drucks des Fluids entgegen der Einführrichtung 5 verschoben wird. Der zur Anflanschung der Führung 3 dienende Flansch 53 ist an der Rohrleitung 2 befestigt, vorzugsweise angeschweißt, sodass die erste Ausführungsform insbesondere für relativ hohe Drücke (z.B. 40 bar) geeignet ist.

Das Absperrventil 8 dient dazu, die Messeinrichtung 4 von der Rohrleitung 2 abnehmen bzw. demontieren zu können. Im abgenommenen oder demontierten Zustand der Messeinrichtung 4 ist oder wird das Absperrventil 8 geschlossen, sodass das Fluid nicht durch die Führung 3 hindurch aus der Rohrleitung 2 ausströmen kann. Ist die Messeinrichtung 4 hingegen montiert, ist das Absperrventil 8 geöffnet. Ferner ist an dem Absperrventil 8 ein Messstutzen 46 vorgesehen, an den ein Messinstrument anschließbar ist, mittels welchem eine Eigenschaft des Fluids messbar ist. Ein derartiges Absperrventil ist z.B. aus der US 5 560 392 bekannt. Beispielsweise kann mittels des Messinstruments der Druck oder die Feuchtigkeit des Fluids gemessen werden. Gemäß Fig. 1 ist der Messstutzen 46 mit einem Blindverschluss 47 dicht verschlossen.

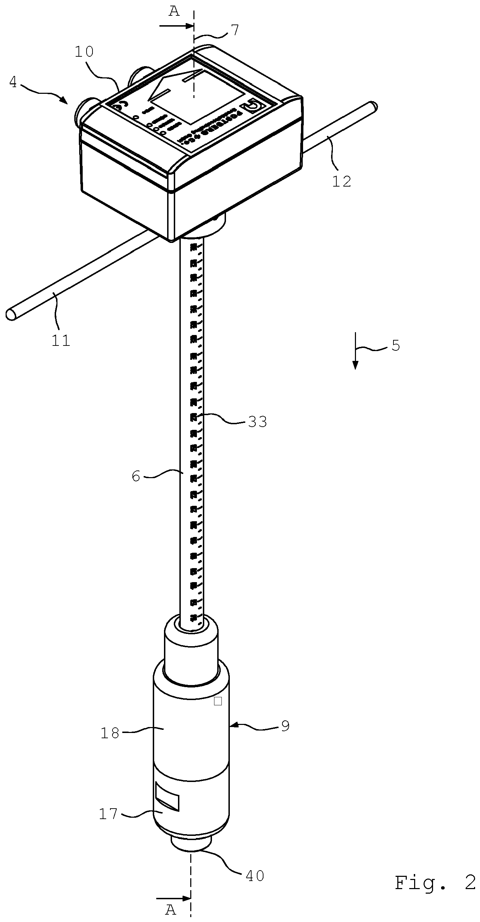

Fig. 2 zeigt eine perspektivische Darstellung der Messeinrichtung 4 und des Freilaufs 9, wobei am unteren Ende der Sensoraufnahme 6 der Endbereich 40 ersichtlich ist. Damit der Messwertgeber 14 in einer definierten Position innerhalb der Rohrleitung 2 positioniert werden kann, ist an der Sensoraufnahme 6 eine Längenskala 33 vorgesehen, mittels welcher der Weg bestimmt werden kann, um welchen die Sensoraufnahme 6 relativ zu dem Freilauf 9 und/oder der Rohrleitung 2 in Einführrichtung 5 verschoben ist.

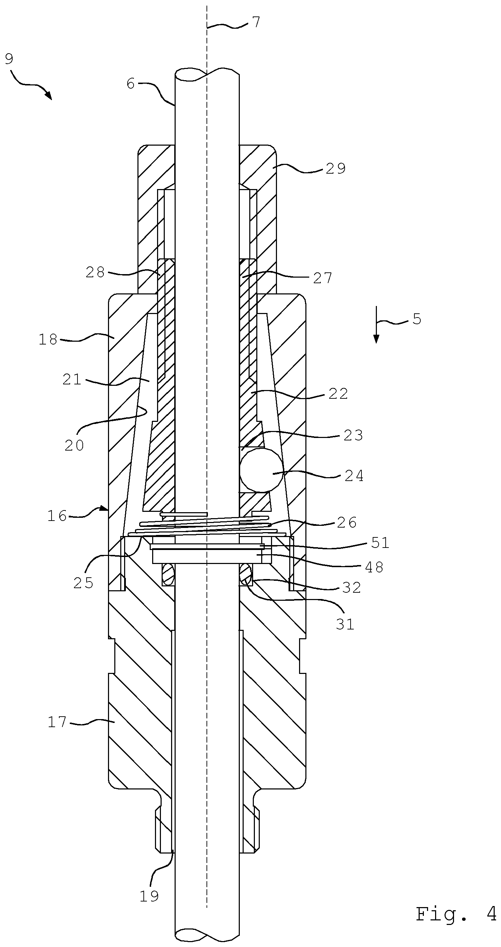

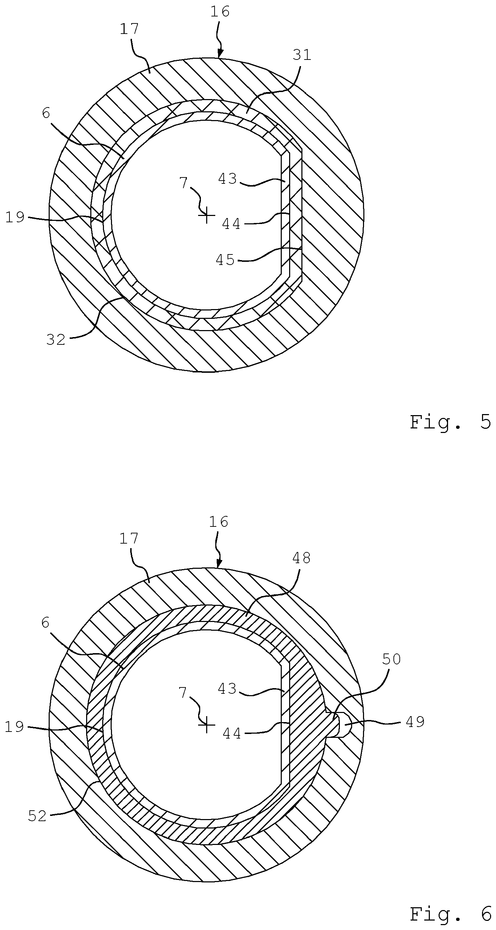

Fig. 3 zeigt eine Schnittansicht durch die Messeinrichtung 4 und durch den Freilauf 9 entlang der Mittellängsachse 7, wobei in der Sensoraufnahme 6 verlaufende elektrische Leitungen 30 angedeutet sind, mittels welchen der Messwertgeber 14 mit der Messelektronik 13 verbunden ist. Ferner ist ein Dichtungsring 31 dargestellt, der in einem in dem Freilauf 9 vorgesehenen Bett 32 (siehe Fig. 4) einliegt und die Sensoraufnahme 6 gegenüber dem Freilauf 9 abdichtet. Dabei wird der Dichtungsring 31 mittels einer Scheibe 48 (siehe Fig. 4) in Einführrichtung 5 gegen den Boden des Betts 32 gedrückt. Sowohl der Außenumfang der Sensoraufnahme 6 als auch der Innenumfang eines sich durch den Freilauf 9 hindurch erstreckenden Durchgangslochs 19 (siehe Fig. 4), durch welches sich die Sensoraufnahme 6 hindurch erstreckt, sind jeweils mit einer Abflachung 43, 44 versehen (siehe Fig. 5), sodass die Sensoraufnahme 6 gegenüber einer Verdrehung relativ zu dem Freilauf 9 um die Längsmittelachse 7 formschlüssig an dem Freilauf 9 gesichert ist. Ferner weist das Bett 32 des Dichtungsrings 31 eine Abflachung 45 auf (siehe Fig. 5), sodass sich der Dichtungsring 31 dichtend an den Außenumfang der Sensoraufnahme 6 sowie an den Innenumfang des Betts 32 anschmiegt.

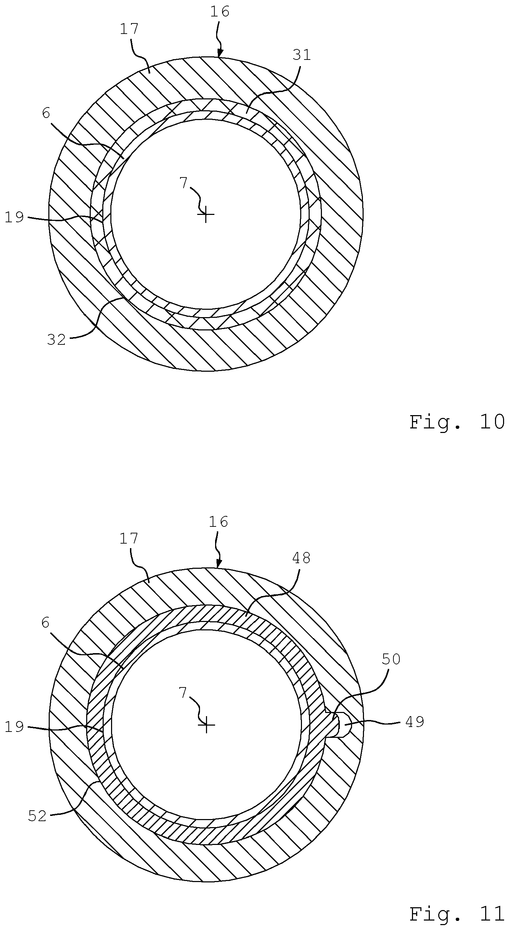

Gemäß einer Abwandlung der ersten Ausführungsform sind der Außenumfang der Sensoraufnahme 6 sowie der Innenumfang des Durchgangslochs 19 jeweils kreisförmig ausgebildet. In diesem Fall entfällt die Abflachung des Betts 32, sodass dieses ringförmig ausgebildet ist. Ferner ist das Durchgangsloch durch die Scheibe 48 kreisförmig. Die Abwandlung der ersten Ausführungsform erlaubt eine Drehung der Sensoraufnahme 6 um die Mittellängsachse 7 relativ zu dem Freilauf 9. Abgesehen von diesen Unterschieden ist die Abwandlung der ersten Ausführungsform insbesondere identisch zu der ersten Ausführungsform aufgebaut, sodass zur weiteren Beschreibung der Abwandlung der ersten Ausführungsform auf die Beschreibung der ersten Ausführungsform verwiesen wird. Querschnitte der Abwandlung der ersten Ausführungsform sind in den Fig. 10 und 11 dargestellt, wobei Fig. 10 einen Querschnitt durch den Freilauf 9 entlang der aus Fig. 3 ersichtlichen Schnittlinie B-B und Fig. 11 einen Querschnitt durch den Freilauf 9 entlang der aus Fig. 3 ersichtlichen Schnittlinie C-C zeigt.

Aus Fig. 4 ist eine andere Schnittansicht des Freilaufs 9 entlang der Mittellängsachse 7 ersichtlich, wobei der Freilauf 9 gegenüber Fig. 3 um die Mittellängsachse 7 insbesondere gedreht ist. Der Freilauf 9 umfasst ein Gehäuse 16, welches ein mit dem Absperrventil 8 fest verbundenes erstes Gehäuseteil 17 und ein zweites Gehäuseteil 18 aufweist, welches mit dem ersten Gehäuseteil 17 verschraubt ist. Alternativ können die beiden Gehäuseteile 17 und 18 z.B. aber auch über einen Bajonettverschluss miteinander verbunden sein. Das erste Gehäuseteil 17 besteht vorzugsweise aus Edelstahl, da es mit dem Fluid in Kontakt treten kann. Das zweite Gehäuseteil 18 besteht bevorzugt aus Messing. Durch das Gehäuse 16 erstreckt sich in Richtung der Mittellängsachse 7 das Durchgangsloch 19 hindurch, in welchem die Sensoraufnahme 6 einliegt. Das zweite Gehäuseteil 18 umfasst eine konische Innenumfangsfläche 20, die einen Innenraum 21 des Gehäuses 16 begrenzt und eine Klemmfläche bildet. In dem Innenraum 21 ist eine Hülse 22 in Einführrichtung 5 verschiebbar angeordnet, wobei durch die Hülse 22 die Sensoraufnahme 6 hindurchgeführt ist. In der Wandung der Hülse 22 ist ein Durchgangsloch 23 eingebracht, welches quer zur Mittellängsachse 7 verläuft. Ferner liegt in dem Durchgangsloch 23 ein als Kugel ausgebildetes Klemmelement 24 ein, welches quer zur Mittellängsachse 7 relativ zu der Hülse 22 bewegbar ist. Zwischen einem durch das erste Gehäuseteil 17 gebildeten Gehäuseboden 25 und einer dem Gehäuseboden 25 zugewandten Stirnseite der Hülse 22 ist eine Feder 26 angeordnet, welche die Hülse 22 in eine der Einführrichtung 5 entgegengesetzte Richtung drückt. Das Klemmelement 24 liegt somit sowohl an der Sensoraufnahme 6 als auch an der Klemmfläche 20 an. Bevorzugt sind mehrere, insbesondere drei, quer zur Mittellängsachse 7 verlaufende Durchgangslöcher in der Wandung der Hülse 22 vorgesehen, in denen jeweils ein Klemmelement 24 einliegt, welches quer zur Mittellängsachse 7 relativ zu der Hülse 22 bewegbar ist. Sind die Klemmelemente jeweils als Kugel ausgebildet, so bilden diese bevorzugt einen Kugelkranz, mittels welchem eine Kugellagerung der Sensoraufnahme 6 in dem Freilauf 9 erfolgt. Dies ermöglicht bei der Abwandlung der ersten Ausführungsform ein leichtgängiges Drehen der Sensoraufnahme 6, sodass der Messwertgeber 14 auf einfache Weise ausgerichtet werden kann.

Wird die Sensoraufnahme 6 in Einführrichtung 5 verschoben, nimmt sie aufgrund von Reibung das Klemmelement 24 sowie die Hülse 22 mit, sodass das Klemmelement 24 zu einem größeren Durchmesser der Innenumfangsfläche 20 hin verschoben wird. Dadurch ist das Klemmelement 24 quer zur Längsmittelachse 7 bewegbar, sodass die Sensoraufnahme 6 relativ zu dem Freilauf 9 in Einführrichtung 5 verschoben werden kann. Wird die Sensoraufnahme 6 hingegen in eine der Einführrichtung 5 entgegengesetzte Richtung verschoben, so nimmt die Sensoraufnahme 6 aufgrund von Reibung das Klemmelement 24 und die Hülse 22 mit, sodass das Klemmelement 24 zu einem kleineren Durchmesser der Klemmfläche 20 hin verschoben wird. Das Klemmelement 24 legt somit die Sensoraufnahme 6 reibschlüssig an der Klemmfläche 20 fest, sodass ein Verschieben der Sensoraufnahme 6 in die der Einführrichtung 5 entgegengesetzte Richtung blockiert ist.

Mit ihrem dem Gehäuseboden 25 abgewandten Endbereich 27 erstreckt sich die Hülse 22 aus dem Gehäuse 16 heraus, wobei der Endbereich 27 mit einem Gewinde 28 versehen ist, auf welches eine Mutter 29 aufgeschraubt ist. Gemäß Fig. 4 ist die Mutter 29 an dem Gehäuse 16 abgestützt und hält die Hülse 22 in einer Position, in der die Sensoraufnahme 6 mittels des Klemmelements 24 an der Klemmfläche 20 reibschlüssig gesichert ist. In diesem Zustand ist der Freilauf 9 inaktiv. Die Mutter 29 bildet somit eine Feststelleinrichtung, mittels welcher die Sensoraufnahme 6 an dem Freilauf 9 fixierbar ist. Wird die Mutter 29 gelöst, lässt sich die Hülse 22 in Einführrichtung 5 verschieben, sodass der Freilauf 9 betriebsbereit ist. Ferner lässt sich im gelösten oder teilgelösten Zustand der Mutter 29 die Hülse 22 mittels des Endbereichs 27 in Einführrichtung 5 verschieben, sodass der Endbereich 27 eine Freigabeeinrichtung bildet, mittels welcher der Sperrzustand des Freilaufs 9 deaktivierbar ist, sodass im deaktivierten Zustand des Freilaufs 9 die Sensoraufnahme 6 in Gegenrichtung der Einführrichtung 5 verschoben werden kann. Das Verschieben des Endbereichs 27 in Einführrichtung 5 kann aber auch mittels der Mutter 29 erfolgen, wenn diese nicht vollständig auf den Endbereich 27 aufgeschraubt ist. Die Feder 26 sorgt dafür, dass die Hülse 22 entgegen der Einführrichtung 5 verschoben und der Freilauf 9 somit automatisch in seinen Betriebszustand zurückgestellt wird, wenn die Hülse 22 nicht mehr über ihren Endbereich 27 in Einführrichtung 5 gedrückt wird.

Ein Querschnitt durch den Freilauf 9 entlang der Schnittlinie B-B gemäß Fig. 3 ist aus Fig. 5 ersichtlich, welche den Verlauf des Dichtungsrings 31 verdeutlicht. Für die Abwandlung der ersten Ausführungsform ist der entsprechende Querschnitt aus Fig. 10 ersichtlich.

Ferner zeigt Fig. 6 einen Querschnitt durch den Freilauf 9 entlang der Schnittlinie C-C gemäß Fig. 3, wonach in dem Gehäuse 16 eine Ringnut 52 und eine zu dieser hin offene, radiale Nut 49 vorgesehen ist, in welche die in der Ringnut 52 einliegende Scheibe 48 mit einer an ihrem Außenumfang vorgesehenen Nase 50 eingreift. Die Scheibe 48, welche insbesondere dazu dient, den Dichtungsring 31 in Einführrichtung 5 gleichmäßig mit Druck zu beaufschlagen, ist somit gegenüber einer Verdrehung relativ zu dem Gehäuse 16 gesichert. Für die Abwandlung der ersten Ausführungsform ist der entsprechende Querschnitt aus Fig. 11 ersichtlich. Die Scheibe 48 ist mittels eines Sicherungsrings 51 (siehe Fig. 4) axial an dem Gehäuse 16 gesichert.

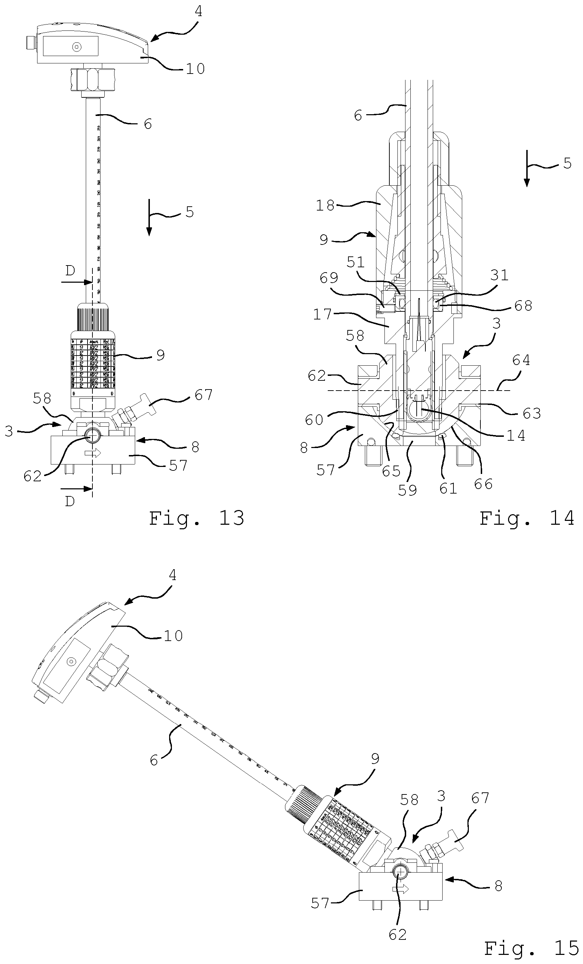

Gemäß einer Variante kann ein in dem ersten Gehäuseteil 17 angeordneter Gehäuseeinsatz 68 (siehe Fig. 14) vorgesehen sein, der das Bett 32 und den Dichtungsring 31 umfasst. Somit ist es möglich, durch Wechseln des Gehäuseeinsatzes den Freilauf 9 mit Sensoraufnahmen 6 unterschiedlichen Außendurchmessers einzusetzen, ohne das ganze Gehäuseteil 17 wechseln zu müssen. Der Gehäuseeinsatz 68 ist vorzugsweise ringförmig ausgebildet und bezüglich der Längsmittelachse 7 insbesondere drehstarr mit dem ersten Gehäuseteil 17 verbunden. Vorteilhaft ist zum Ausbilden dieser drehstarren Verbindung wenigstens ein von außen zugängliches Sicherungsmittel, wie z.B. eine Schraube 69 (siehe Fig. 14), in das Gehäuse 16 eingebracht und/oder eingeschraubt, wobei der Gehäuseeinsatz 68 mit dem Sicherungsmittel in dem ersten Gehäuseteil 17 fixiert, insbesondere durch von dem Sicherungsmittel auf den Gehäuseeinsatz 68 ausgeübten Druck geklemmt wird. Somit ist es möglich, durch Lösen des Sicherungsmittels den Gehäuseeinsatz 68 mittels der Sensoraufnahme 6 relativ zu dem Gehäuse 16 um die Längsmittelachse 7 zu drehen, wenn die Sensoraufnahme 6 mit der Abflachung 43 versehen ist. Die Abflachung 44 des Durchgangslochs 19 ist dann bevorzugt nur in dem Gehäuseeinsatz 68 und/oder in dem Teil des Durchgangslochs 19 vorgesehen, der durch den Gehäuseeinsatz 68 hindurch verläuft. Vorteilhaft ist der Gehäuseeinsatz 68 axial mit einem Sicherungsring 51 in dem Gehäuseteil 17 fixiert. Die Scheibe 48 kann vorgesehen sein oder entfallen. Beispielsweise bildet die Scheibe 48 einen integrativen Bestandteil des Gehäuseeinsatzes 68. In diesem Fall ist die Scheibe 48 vorzugsweise starr mit dem Gehäuseeinsatz verbunden und/oder einstückig mit diesem ausgebildet. Insbesondere entfällt aber die Nase 50, sodass eine Verdrehung des Gehäuseeinsatzes 68 nicht behindert wird.

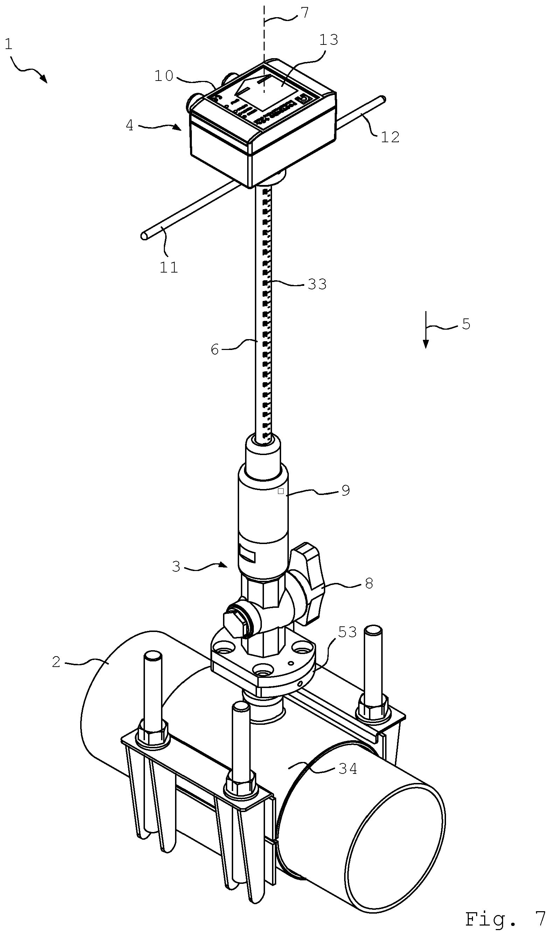

Aus Fig. 7 ist eine Vorrichtung 1 gemäß einer zweiten Ausführungsform der Erfindung ersichtlich, wobei zu der ersten Ausführungsform ähnliche oder identische Merkmale mit denselben Bezugszeichen wie bei der ersten Ausführungsform bezeichnet sind. Die zweite Ausführungsform unterscheidet sich von der ersten Ausführungsform lediglich dadurch, dass die Führung 3 mittels einer Schelle 34 an der Rohrleitung 2 befestigt ist. Der zur Anflanschung der Führung 3 dienende Flansch 53 ist an der Schelle 34 befestigt, vorzugsweise angeschweißt, sodass die zweite Ausführungsform insbesondere für relativ niedrige Drücke (z.B. 16 bar) geeignet ist. Zur weiteren Beschreibung der zweiten Ausführungsform wird auf die Beschreibung der ersten Ausführungsform verwiesen.

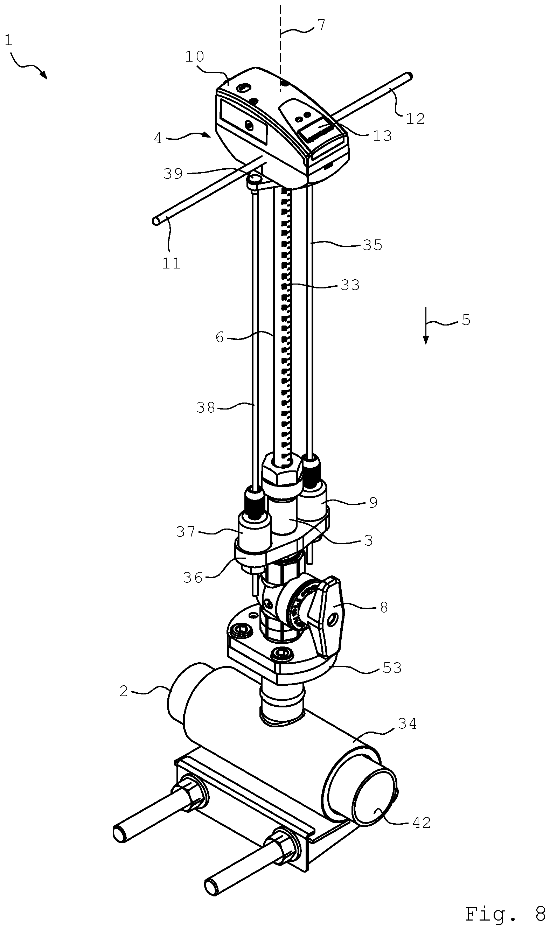

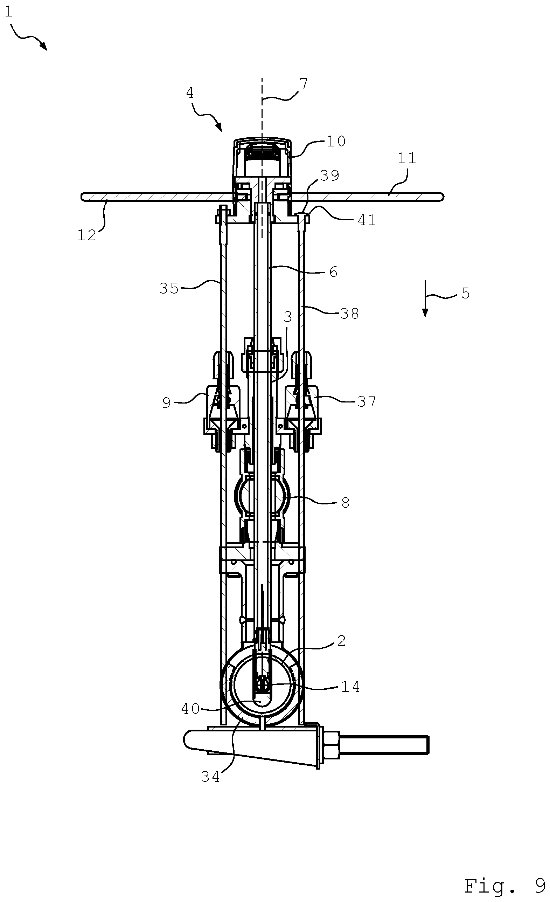

Aus Fig. 8 ist eine perspektivische Ansicht einer Vorrichtung 1 gemäß einer dritten Ausführungsform der Erfindung ersichtlich, wobei zu den vorhergehenden Ausführungsformen ähnliche oder identische Merkmale mit denselben Bezugszeichen wie bei den vorgehenden Ausführungsformen bezeichnet sind. Ferner zeigt Fig. 9 einen Schnitt der Vorrichtung 1 gemäß der dritten Ausführungsform entlang der aus Fig. 8 ersichtlichen Mittellängsachse 7. Gemäß der dritten Ausführungsform ist an der Sensoraufnahme 6 ein Seil 35 befestigt, welches durch einen Freilauf 9 hindurchgeführt ist, der mittels einer Halterung 36 an der Führung 3 befestigt und neben dieser angeordnet ist. Anders als bei den vorhergehenden Ausführungsformen bildet der Freilauf 9 gemäß der dritten Ausführungsform somit keinen Teil der Führung 3 für die Sensoraufnahme 6. Wird die Messeinrichtung 4 in Einführrichtung 5 verschoben, so läuft auch das Seil 35 durch den Freilauf 9 in Einführrichtung 5 hindurch, sodass der Freilauf 9 seinen Freilaufzustand einnimmt. Wird die Sensoraufnahme 6 hingegen in eine der Einführrichtung 5 entgegengesetzte Richtung bewegt, nimmt der Freilauf 9 seinen Sperrzustand an und blockiert das Seil 35, welches somit die Sensoraufnahme 6 an der Halterung 36 sichert. Ein weiteres Verschieben der Messeinrichtung 4 entgegen der Einführrichtung 5 ist somit nicht mehr möglich.

Ferner ist an der Halterung 36 ein zusätzlicher Freilauf 37 befestigt, der analog zum Freilauf 9 ausgebildet ist. Durch den Freilauf 37 ist ein Justierelement in Form eines Seils 38 hindurchgeführt, welches in und entgegen der Einführrichtung 5 verschiebbar an der Sensoraufnahme 6 geführt ist und an einem Ende einen Endanschlag 39 aufweist, der mit einer Gegenfläche 41 der Sensoraufnahme 6 zur Anlage gebracht werden kann. Das Seil 38, die Gegenfläche 41 und der Freilauf 37 bilden eine Justiereinrichtung, mittels welcher der Messwertgeber 14 vorzugsweise mittig in der Rohrleitung 2 positioniert werden kann. Dazu wird die Sensoraufnahme 6 so weit in die Rohrleitung 2 eingeschoben, bis ihr der Rohrleitung 2 zugewandter Endbereich 40 an der Innenwandung 42 der Rohrleitung 2 anliegt. Durch Messen des Außendurchmessers der Rohrleitung 2 und durch Ablesen der Längenskala 33 kann nun der Innendurchmesser der Rohrleitung 2 berechnet werden. Das Seil 38 wird dann in Einführrichtung 5 oder in die entgegengesetzte Richtung relativ zu dem Freilauf 37 verschoben, bis der Abstand zwischen dem Endanschlag 39 und der Gegenfläche 41 der Sensoraufnahme 6 der Hälfte des berechneten Innendurchmessers abzüglich des Abstands zwischen dem Messwertgeber 14 und dem stirnseitigen Ende des Endbereichs 40 entspricht. Ist dafür das Seil 38 entgegen der Einführrichtung 5 zu verschieben, wird der Freilauf 37 mittels seiner Freigabeeinrichtung freigegeben. Anschließend ist der Freilauf 37 aber wieder in seinen Betriebszustand zu überführen. Danach wird der Freilauf 9 mittels seiner Freigabeeinrichtung freigegeben, sodass die Messeinrichtung 4 entgegen der Einführrichtung 5 verschoben werden kann, bis der Endanschlag 39 an der Gegenfläche 41 anliegt. Der Freilauf 37 blockiert nun ein weiteres Verschieben der Sensoraufnahme 6 entgegen der Einführrichtung 5. Somit ist der Messwertgeber 14 in der Mitte der Rohrleitung 2 positioniert, ohne dass die Gefahr besteht, dass die Messeinrichtung 4 aufgrund des in der Rohrleitung herrschenden Drucks zu weit aus der Rohrleitung 2 hinausgedrückt wird. Zur weiteren Beschreibung der dritten Ausführungsform wird die Beschreibung der vorhergehenden Ausführungsformen verwiesen.

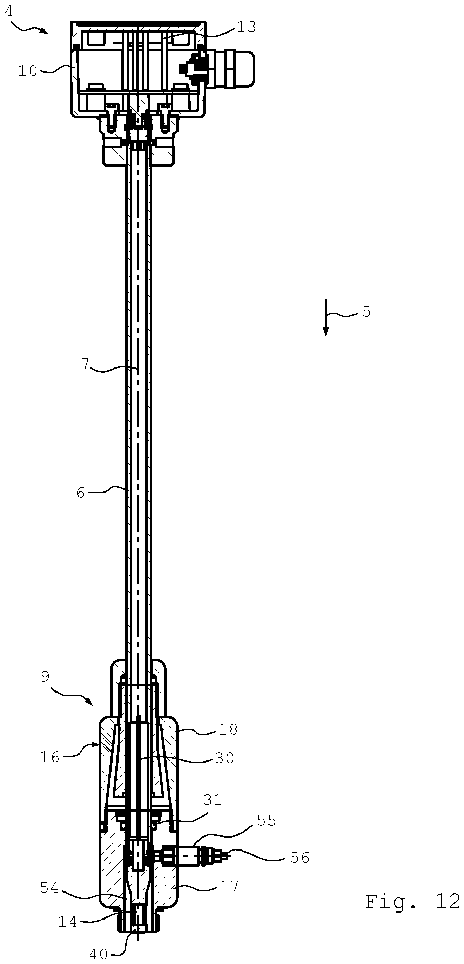

Erstreckt sich die Aufnahme 6 durch den Freilauf 9 hindurch, wie z.B. bei der ersten Ausführungsform, kann der Innenraum 54 der Führung 3 zwischen dem Absperrventil 8 und dem Dichtungsring 31 auch dann noch unter Druck stehen, wenn das Absperrventil 8 geschlossen ist. Dieser Druck kann beim Herausführen der Sensoraufnahme 6 aus dem Freilauf 9 störend wirken, sodass gemäß einer Weiterbildung der ersten Ausführungsform die Führung 3 ein Entlüftungsventil 55 aufweist, mittels welchem der Innenraum 54 entlüftet werden kann. Dies ist aus Fig. 12 ersichtlich, die einen Längsschnitt durch die Messeinrichtung 4 und durch den Freilauf 9 gemäß der Weiterbildung der ersten Ausführungsform entlang der aus Fig. 2 ersichtlichen Schnittlinie A-A zeigt. Das Entlüftungsventil 55 umfasst ein Betätigungselement 56 in Form eines Stifts, mittels welchem das Entlüftungsventil 55 betätigbar ist. Wird das Betätigungselement 56 in das Entlüftungsventil 55 hineingedrückt, gibt dieses eine gasdurchlässige Verbindung von dem Innenraum 54 zu der Umgebung hin frei, sodass der Innenraum 54 entlüftet wird. Im nicht betätigten Zustand des Betätigungselements 56 ist das Entlüftungsventil 55 gasundurchlässig. Das Betätigungselement 56 bildet ferner eine Druckanzeige. Steht der Innenraum 54 unter Druck, so ragt das Betätigungselement 56 aus dem Entlüftungsventil 55 heraus. Ist der Innenraum 54 hingegen druckfrei, ragt das Betätigungselement 56 nicht aus dem Entlüftungsventil 55 heraus. Das Entlüftungsventil 55 ist an dem Gehäuse 16 des Freilaufs 9 befestigt. Abgesehen von diesen Unterschieden ist die Weiterbildung der ersten Ausführungsform insbesondere identisch zu der ersten Ausführungsform aufgebaut, sodass zur weiteren Beschreibung der Weiterbildung der ersten Ausführungsform auf die Beschreibung der ersten Ausführungsform verwiesen wird. Das Entlüftungsventil 55 kann bei allen Ausführungsformen vorgesehen werden, bei denen sich die Aufnahme 6 durch den Freilauf 9 hindurch erstreckt.

Aus den Fig. 13 bis 15 ist in unterschiedlichen Darstellungen eine Vorrichtung gemäß einer vierten Ausführungsform der Erfindung ersichtlich, wobei zu den vorhergehenden Ausführungsformen ähnliche oder identische Merkmale mit denselben Bezugszeichen wie bei den vorhergehenden Ausführungsformen bezeichnet sind. Die vierte Ausführungsform basiert auf der ersten oder auf der zweiten Ausführungsform, wobei im Unterschied zu diesen Ausführungsformen die Führung 3 ein Schwenklager umfasst. Die Führung 3 weist dazu ein erstes Gelenkteil 57 und ein in diesem um eine Schwenkachse 64 schwenkbar gelagertes zweites Gelenkteil 58 auf, welches zusammen mit dem ersten Gelenkteil 57 das ein Absperrventil 8 bildende Schwenkalger bildet. Die Gelenkteile 57 und 58 umfassen jeweils ein Durchführungsloch 59 bzw. 60, wobei die Durchführungslöcher 59 und 60 in einem ungeschwenkten Zustand des Schwenklagers miteinander fluchten, der einem geöffneten Zustand des Absperrventils 8 entspricht. Das erste Gelenkteil 57 ist mit seinem unteren Ende insbesondere an dem aus Fig. 1 oder aus Fig. 7 ersichtlichen Flansch 53 befestigt, auf dessen Darstellung hier verzichtet wurde. Ferner ist das Durchführungsloch 59 insbesondere strömungsleitend mit dem Innenraum 15 der Rohrleitung 2 verbunden, die hier ebenfalls nicht dargestellt ist.

Die Sensoraufnahme 6 liegt in dem Durchführungsloch 60 ein und ist in diesem in Einführrichtung 5 verschiebbar geführt, sodass die Sensoraufnahme 6 zusammen mit dem Messwertgeber 14 durch das Durchführungsloch 59 hindurch in den Innenraum 15 der Rohrleitung 2 einführbar ist. Ferner erstreckt sich die Sensoraufnahme 6 durch den Freilauf 9 hindurch, der mit dem zweiten Gelenkteil 58 fest verbunden ist. Das Durchgangsloch 19 des Freilaufs 9 fluchtet dabei mit dem Durchführungsloch 60. Das erste Gelenkteil 57 umfasst einen das Durchführungsloch 59 umringenden Dichtungsring 61, der die beiden Gelenkteile 57 und 58 gegeneinander abdichtet. Im dem aus den Fig. 13 und Fig. 14 ersichtlichen, geöffneten Zustand des Absperrventils 8 umringt der Dichtungsring 61 auch das Durchführungsloch 60.

Das zweite Gelenkteil 58 greift mit zwei einander gegenüberliegenden und sich in Richtung der Schwenkachse 64 erstreckenden Lagerzapfen 62 in Lagerausnehmungen 63 des ersten Gelenkteils 57 ein und ist in diesen gleitfähig gelagert. Ferner liegt das erste Gelenkteil 57 mit einer Lagerfläche 65 gleitfähig an einer Lagerfläche 66 des zweiten Gelenkteils 58 an. Wird das zweite Gelenkteil 58 um die Schwenkachse 64 relativ zu dem ersten Gelenkteil 57 geschwenkt, überdeckt die Lagerfläche 66 das Durchführungsloch 59. Die Lagerfläche 66 steht dabei mit dem Dichtungsring 61 in Kontakt, der das Durchführungsloch 59 gegen die Lagerfläche 66 abdichtet, sodass das Absperrventil 8 seinen gesperrten Zustand annimmt, der aus Fig. 15 ersichtlich ist. Aus Sicherheitsgründen umfasst das Absperrventil 8 ferner ein Verriegelungselement 67, mittels welchem die beiden Gelenkteile 57 und 58 sowohl im geöffneten Zustand als auch im gesperrten Zustand des Absperrventils 8 miteinander verriegelbar sind. Zur weiteren Beschreibung der vierten Ausführungsform wird auf die Beschreibung der vorherigen Ausführungsformen verwiesen.

### Bezugszeichenliste

1 Vorrichtung
2 Rohrleitung
3 Führung
4 Messeinrichtung / Positioniereinrichtung
5 Einführrichtung
6 Sensoraufnahme / Aufnahme
7 Mittellängsachse der Sensoraufnahme
8 Absperrventil
9 linearer Freilauf
10 Gehäuse für Messelektronik
11 Griff
12 Griff
13 Messelektronik
14 Messwertgeber / Gegenstand
15 Innenraum der Rohrleitung
16 Gehäuse des Freilaufs
17 erstes Gehäuseteil
18 zweites Gehäuseteil
19 Durchgangsloch im Gehäuse
20 Klemmfläche
21 Innenraum des Gehäuses
22 Hülse im Gehäuse
23 Durchgangsloch in Wandung der Hülse
24 Klemmelement / Kugel
25 Gehäuseboden
26 Feder
27 Endbereich der Hülse / Freigabeeinrichtung
28 Gewinde
29Mutter / Festelleinrichtung
30 elektrische Leitung
31 Dichtungsring
32 Bett für Dichtungsring
33 Längenskala an Sensoraufnahme
34 Schelle
35 Seil
36 Halterung
37 zusätzlicher Freilauf
38 Seil / Justierelement
39 Endanschlag des Seils
40 Endbereich der Sensoraufnahme
41 Gegenfläche der Sensoraufnahme
42 Innenwandung der Rohrleitung
43 Abflachung
44 Abflachung
45 Abflachung
46 Messstutzen
47 Blindverschluss
48 Scheibe
49 Nut
50 Nase der Scheibe
51 Sicherungsring
52 Ringnut
53 Flansch
54 Innenraum der Führung
55 Entlüftungsventil
56 Betätigungselement des Entlüftungsventils
57 erstes Gelenkteil
58 zweites Gelenkteil
59 Durchführungsloch im ersten Gelenkteil
60 Durchführungsloch im zweiten Gelenkteil
61 Dichtungsring
62 Lagerzapfen
63 Lagerausnehmung
64 Schwenkachse
65 Lagerfläche des ersten Gelenkteils
66 Lagerfläche des zweiten Gelenkteils
67 Verriegelungselement
68 Gehäuseeinsatz
69 Sicherungsmittel / Schraube

## Patentansprüche

1. Vorrichtung zum Einführen eines Gegenstands in eine Rohrleitung, mit einer Führung (3) und einer mittels der Führung (3) in einer Einführrichtung (5) verschiebbar geführten Positioniereinrichtung (4), wobei die Führung (3) derart ausgestaltet ist, mit der Rohrleitung (2) fest verbunden zu werden und die Positioniereinrichtung (4) verschiebbar an der Rohrleitung (2) zu führen, wobei die Positioniereinrichtung (4) derart ausgestaltet ist, sich durch ein in der Wandung der Rohrleitung (2) vorgesehenes Loch hindurch zu erstrecken, den Gegenstand (14) zu tragen und diesen durch Verschieben der Positioniereinrichtung (4) in Einführrichtung (5) in die Rohrleitung (2) einführen zu können, und wobei die Positioniereinrichtung (4) eine als Rohr ausgebildete Aufnahme (6) umfasst, die derart ausgestaltet ist, in die Rohrleitung (2) in Einführrichtung (5) eingeschoben werden zu können und an ihrem der Rohrleitung (2) zugewandten Endbereich (40) den Gegenstand (14) anzuordnen, **gekennzeichnet durch**
einen fest mit der Führung (3) verbundenen, linearen Freilauf (9), der als Klemmfreilauf ausgebildet ist und einen durch Verschieben der Positioniereinrichtung (4) betätigbaren Klemmmechanismus umfasst, wobei die Positioniereinrichtung (4) eine mit dem Freilauf (9) in Wirkverbindung stehende Sicherungskomponente umfasst und derart ausgestaltet ist, mit der Rohrleitung (2) unter Zwischenschaltung des Freilaufs (9) verbunden zu werden, der bei Verschieben der Positioniereinrichtung (4) entgegen der Einführrichtung (5) seinen Sperrzustand und bei Verschieben der Positioniereinrichtung (4) in Einführrichtung (5) seinen Freilaufzustand annimmt, wobei die Sicherungskomponente entweder durch die Aufnahme (6) gebildet ist oder fest mit der Aufnahme (6) verbunden und durch wenigstens ein Seil (35) gebildet ist, und wobei der Freilauf (9) ein Gehäuse (16) umfasst, durch welches sich die Sicherungskomponente in Einführrichtung (5) hindurch erstreckt, in dem Gehäuse (16) eine in Einführrichtung (5) schräg oder gekrümmt verlaufende Klemmfläche (20) vorgesehen ist und zwischen der Sicherungskomponente und der Klemmfläche (20) wenigstens ein bewegbares Klemmelement (24) angeordnet ist, welches sowohl an der Klemmfläche (20) als auch an der Sicherungskomponente anliegt, sodass diese in Einführrichtung (5) relativ zu dem Gehäuse (16) verschiebbar ist, wohingegen eine Verschiebung der Sicherungskomponente in der der Einführrichtung (5) entgegengesetzten Richtung durch ein Zusammenwirken des Klemmelements (24) mit der Sicherungskomponente und der Klemmfläche (20) blockierbar ist.

2. Vorrichtung nach Anspruch 1,
**dadurch gekennzeichnet, dass**
der Freilauf (9) eine betätigbare Freigabeeinrichtung (27) umfasst, mittels welcher der Sperrzustand deaktivierbar ist.

3. Vorrichtung nach Anspruch 1 oder 2,
**dadurch gekennzeichnet, dass**
die Klemmfläche (20) durch eine in Einführrichtung (5) konische Innenumfangsfläche des Gehäuses (16) gebildet ist.

4. Vorrichtung nach einem der vorangehenden Ansprüche,
**dadurch gekennzeichnet, dass**
in dem Gehäuse (16) eine verschiebbare Hülse (22) angeordnet ist, durch welche sich die Sicherungskomponente hindurch erstreckt und in welcher das Klemmelement (24) gelagert ist.

5. Vorrichtung nach Anspruch 4,
**dadurch gekennzeichnet, dass**
in der Wandung der Hülse (22) wenigstens ein sich quer oder schräg zur Einführrichtung (5) erstreckendes Durchgangsloch (23) vorgesehen ist, in welchem das Klemmelement (24) einliegt.

6. Vorrichtung nach Anspruch 4 oder 5,
**dadurch gekennzeichnet, dass**
die Hülse (22) mittels einer Feder (26) vorgespannt ist, sodass das Klemmelement (24) sowohl gegen die Sicherungskomponente als auch gegen die Klemmfläche (20) gedrückt wird.

7. Vorrichtung nach einem der vorangehenden Ansprüche, **gekennzeichnet durch**
- ein an der Aufnahme (6) verschiebbar geführtes Justierelement (38), an dem ein Endanschlag (39) vorgesehen ist, der durch Verschieben des Justierelements relativ zu der Aufnahme (6) mit einer Gegenfläche (41) der Aufnahme (6) zur Anlage gebracht werden kann, wobei das Justierelement (38) derart ausgestaltet ist, mit der Rohrleitung (2) unter Zwischenschaltung eines zusätzlichen linearen Freilaufs (37) verbunden zu werden.

8. Vorrichtung nach einem der vorangehenden Ansprüche,
**dadurch gekennzeichnet, dass**
in die Rohrleitung (2) Druckluft oder ein anderes unter Druck stehendes Fluid eingebracht ist.

9. Vorrichtung nach Anspruch 8,
**dadurch gekennzeichnet, dass**
der Gegenstand (14) wenigstens einen Messwertgeber umfasst, mittels welchem wenigstens eine physikalische Eigenschaft der Druckluft oder des Fluids messbar ist.

## Claims

1. Device for introducing an object into a pipe comprising a guide (3) and a positioning device (4) movably guided in an introduction direction (5) by means of the guide (3), wherein the guide (3) is configured such that it is securely connected to the pipe (2) and movably guides the positioning device (4) on the pipe (2), wherein the positioning device (4) is configured such that it extends through a hole provided in the wall of the pipe (2), supports the object (14) and is able to introduce said object into the pipe (2) by moving the positioning device (4) in the introduction direction (5), and wherein the positioning device (4) comprises a receptacle (6) formed as a tube, which is configured such that it can be inserted into the pipe (2) in the introduction direction (5) and position the object (14) at its end region (40) facing towards the pipe (2), further comprising a linear one-way clutch (9), which is securely connected to the guide (3) and comprises a clamping mechanism that can be actuated by moving the positioning device (4), wherein the positioning device (4) comprises a locking component that cooperates with the one-way clutch (9) and is configured such that it is connected to the pipe (2) with the interconnection of the one-way clutch (9), which adopts its blocking state when the positioning device (4) moves against the introduction direction (5) and adopts its one-way clutch position when the positioning device (4) moves in the introduction direction (5), wherein the locking component is formed either by the receptacle (6) or is securely connected to the receptacle (6) and formed by at least one cable (35), and wherein the one-way clutch (9) comprises a housing (16), through which the locking component extends in the introduction direction (5), in which housing (16) a clamping surface (20) running in an inclined or curved manner in the introduction direction (5) is provided and at least one movable clamping element (24) is arranged between the locking component and the clamping surface (20), which abuts both the clamping surface (20) and the locking component such that the latter can be moved relative to the housing (16) in the introduction direction (5), while movement of the locking component in the opposite direction to the introduction direction (5) can be blocked by a cooperation of the clamping element (24) with the locking component and the clamping surface (20).

2. Device according to claim 1, **characterised in that** the one-way clutch (9) comprises a release mechanism (27) which can be actuated to deactivate the blocking state.

3. Device according to claim 1 or claim 2, **characterised in that** the clamping surface (20) is formed by a conical internal circumferential surface of the housing (16) in the introduction direction (5).

4. Device according to any one of the preceding claims, **characterised in that** a movable sleeve (22) is arranged in the housing (16), through which sleeve the locking component extends and in which the clamping element (24) is mounted.

5. Device according to claim 4, **characterised in that** at least one feed-through hole (23) extending transversely or at an angle to the introduction direction (5) is provided in the wall of the sleeve (22) in which the clamping element (24) is enclosed.

6. Device according to claim 4 or 5, **characterised in that** the sleeve (22) is tensioned by means of a spring (26) such that the clamping element (24) is pressed against both the locking component and the clamping surface (20).

7. Device according to any one of the preceding claims, further comprising
- an adjusting element (38) movably guided on the receptacle (6), on which element an end stop (39) is provided, which can be brought into contact with a counter-surface (41) of the receptacle (6) by moving the adjusting element (38) relative to the receptacle (6), wherein the adjusting element (38) is configured such that it is connected to the pipe (2) with the interconnection of an additional linear one-way clutch (37).

8. Device according to anyone of the preceding claims, **characterised in that** compressed air or another fluid under pressure is introduced into the pipe (2).

9. Device according to claim 8, **characterised in that** the object (14) comprises at least one measurement sensor by means of which at least one physical property of the compressed air or fluid can be measured.

## Revendications

1. Dispositif d'introduction d'un objet dans une conduite tubulaire, avec un guidage (3) et un équipement de positionnement (4) guidé de façon coulissante dans une direction d'introduction (5) au moyen du guidage (3), le guidage (3) étant constitué de façon à être raccordé fixement à la conduite tubulaire (2) et à guider l'équipement de positionnement (4) de façon coulissante sur la conduite tubulaire (2), l'équipement de positionnement (4) étant constitué de façon à s'étendre à travers un trou prévu dans la paroi de la conduite tubulaire (2), à porter l'objet (14) et à pouvoir introduire celui-ci dans la conduite tubulaire (2) par coulissement de l'équipement de positionnement (4) dans la direction d'introduction (5), et l'équipement de positionnement (4) comprenant un logement (6), formé en tant que tube, qui est constitué de façon à pouvoir être inséré dans la conduite tubulaire (2) dans la direction d'introduction (5) et à disposer l'objet (14) sur sa zone extrême (40) tournée vers la conduite tubulaire (2), **caractérisé par** une course libre (9) linéaire raccordée fixement au guidage (3) qui est formée en tant que course libre de serrage et qui comprend un mécanisme de serrage actionnable par un coulissement de l'équipement de positionnement (4), l'équipement de positionnement (4) comprenant une composante de blocage qui est en liaison opérationnelle avec la course libre (9) et qui est constituée de façon à pouvoir être raccordée à la conduite tubulaire (2) avec interposition de la course libre (9) qui, lors du coulissement de l'équipement de positionnement (4) à l'opposé de la direction d'introduction (5), adopte son état de verrouillage et, lors du coulissement de l'équipement de positionnement (4) dans la direction d'introduction (5), adopte son état de course libre, la composante de blocage étant soit formée par le logement (6) soit raccordée fixement au logement (6) et formée par au moins un câble (35), et la course libre (9) comprenant un boîtier (16) à travers lequel la composante de blocage s'étend dans la direction d'introduction (5), une surface de serrage (20) placée de façon oblique ou courbée dans la direction d'introduction (5) étant prévue dans le boîtier (16), et au moins un élément de serrage (24) mobile étant disposé entre la composante de blocage et la surface de serrage (20), lequel est adjacent aussi bien à la surface de serrage (20) qu'à la composante de blocage de telle sorte que celle-ci peut coulisser dans la direction d'introduction (5) relativement au boîtier (16), tandis qu'un coulissement de la composante de blocage dans la direction opposée à la direction d'introduction (5) peut être bloqué par une coopération de l'élément de serrage (24) avec la composante de blocage et la surface de serrage (20).

2. Dispositif selon la revendication 1,
**caractérisé en ce que**
la course libre (9) comprend un équipement de libération (27) actionnable, au moyen duquel l'état de verrouillage peut être désactivé.

3. Dispositif selon la revendication 1 ou 2,
**caractérisé en ce que**
la surface de serrage (20) est formée par une surface périphérique intérieure du boîtier (16) conique dans la direction d'introduction (5).

4. Dispositif selon l'une des revendications précédentes,
**caractérisé en ce que**,
dans le boîtier (16), il est formé une douille (22) coulissante à travers laquelle s'étend la composante de blocage et dans laquelle l'élément de serrage (24) est supporté.

5. Dispositif selon la revendication 4,
**caractérisé en ce que**,
dans la paroi de la douille (22), il est prévu au moins un trou traversant (23), s'étendant transversalement ou obliquement à la direction d'introduction (5), dans lequel est situé l'élément de serrage (24).

6. Dispositif selon la revendication 4 ou 5,
**caractérisé en ce que**
la douille (22) est prétendue au moyen d'un ressort (26) de telle sorte que l'élément de serrage (24) est pressé aussi bien contre la composante de blocage que contre la surface de serrage (20).

7. Dispositif selon l'une des revendications précédentes,
**caractérisé par**
- un élément d'ajustement (38), guidé de façon coulissante sur le logement (6), sur lequel il est prévu une butée d'extrémité (39) qui peut être amenée en appui avec une contre-surface (41) du logement (6) par un coulissement de l'élément d'ajustement relativement au logement (6), l'élément d'ajustement (38) étant constitué de façon à être raccordé à la conduite tubulaire (2) avec interposition d'une course libre (37) linéaire supplémentaire.

8. Dispositif selon l'une des revendications précédentes,
**caractérisé en ce que**
de l'air comprimé ou un autre fluide sous pression est mis en place dans la conduite tubulaire (2).

9. Dispositif selon la revendication 8,
**caractérisé en ce que**
l'objet (14) comprend au moins un capteur de mesure au moyen duquel au moins une caractéristique physique de l'air comprimé ou du fluide peut être mesurée.
